# EUROPEAN PATENT APPLICATION

(11) **EP 2 259 122 A1**
(43) Date of publication of application: **08.12.2010**
(21) Application number: 10178067.4
(22) Date of filing: 14.09.2005
(51) Int. Cl.: G02B 26/00, G02F 1/13357

(54) **Systems and methods for illuminating interferometric modulator display**

(30) Priority: 27.09.2004 US 613951 P; 22.02.2005 US 64143
(62) Divisional of application: 05255638.8
(71) Applicant: Qualcomm Mems Technologies, Inc., San Diego, CA 92121 (US)
(72) Inventor: Cummings, William J., Millbrae, CA 94030 (US); Gally, Brian J., Los Gatos, CA 95032 (US)
(74) Representative: Dunlop, Hugh Christopher

(57) **Abstract**

Methods and apparatus are disclosed for directing light from a remote light source into interferometric modulator structures. Light redirectors, including reflective structures, scattering centers, and fluorescent or phosphorescent material, are used to redirect light from a light source into interferometric modulator structures.

## Description

### Background

### Field of the Invention

The field of the invention relates to microelectromechanical systems (MEMS).

### Description of the Related Technology

Microelectromechanical systems (MEMS) include micro mechanical elements, actuators, and electronics. Micromechanical elements may be created using deposition, etching, and or other micromachining processes that etch away parts of substrates and/or deposited material layers or that add layers to form electrical and electromechanical devices. One type of MEMS device is called an interferometric modulator. An interferometric modulator may comprise a pair of conductive plates, one or both of which may be transparent and/or reflective in whole or part and capable of relative motion upon application of an appropriate electrical signal. One plate may comprise a stationary layer deposited on a substrate, the other plate may comprise a metallic membrane separated from the stationary layer by an air gap. Such devices have a wide range of applications, and it would be beneficial in the art to utilize and/or modify the characteristics of these types of devices so that their features can be exploited in improving existing products and creating new products that have not yet been developed.

### Summary of Certain Embodiments

The system, method, and devices of the invention each have several aspects, no single one of which is solely responsible for its desirable attributes. Without limiting the scope of this invention, its more prominent features will now be discussed briefly. After considering this discussion, and particularly after reading the section entitled "Detailed Description of Certain Embodiments" one will understand how the features of this invention provide advantages over other display devices.

One embodiment of the invention comprises a reflective display apparatus, comprising: a substrate having a first surface; a plurality of interferometric modulators disposed on a second surface of said substrate opposite the first surface; and a cover having a third surface, the cover positioned in optical communication with the first surface with a gap existing between the first and third surfaces, the cover including a plurality of light redirectors, the light redirectors configured to redirect at least a portion of light incident on the third surface of the cover onto the first surface.

Another embodiment of the invention comprises a method of manufacturing a reflective display, comprising: positioning a plurality of interferometric modulators on a first surface of a substrate; forming a plurality of light redirectors in or on a cover, the cover having a second surface; and positioning the cover in optical communication with the plurality of interferometric modulators such that a gap exists between the second surface and a third surface on the substrate opposite the first surface, the light redirectors configured to redirect at least a portion of light incident on the second surface onto the third surface.

Another embodiment of the invention comprises a reflective display apparatus, comprising: means for providing support; means for interferometrically modulating light; and means for covering said supporting means and said modulating means, said covering means positioned in optical communication said supporting means with a gap therebetween, said covering mean including means for redirecting light, said light redirecting means configured to redirect at least a portion of light incident said covering means onto said supporting means.

Another embodiment of the invention comprises a reflective display apparatus, comprising: a substrate having a first surface; a plurality of reflective display elements disposed on a second surface of said substrate opposite the first surface; and a plurality of light redirectors in optical communication with said substrate and reflective display elements so as to redirect at least a portion of light originating along a path that is oblique to said first surface into the substrate and reflective display elements.

Another embodiment of the invention comprises a reflective display apparatus, comprising: first means for providing reflective image content; second means for supporting the first means; and a plurality of third means for redirecting light originating along a path that is oblique to said second means into the first means.

Another embodiment of the invention comprises a method of manufacturing a reflective display, comprising: positioning a plurality of reflective display elements on a first surface of a substrate; and positioning a plurality of light redirectors in optical communication with said substrate and reflective display elements so as to redirect at least a portion of light originating along a path that is oblique to a second surface of the substrate opposite the first surface into the substrate and reflective display elements.

Another embodiment of the invention comprises a method of illuminating a reflective display, comprising: transmitting light onto a reflective display panel along a path that is oblique to the display panel; and redirecting at least a portion of said transmitted light so that redirected light is directed along a path that is less oblique to said display panel than said transmitted light.

Another embodiment of the invention comprises a reflective display apparatus, comprising: first means for providing reflective image content; second means for redirecting light originating along a path that is oblique to the first means; and third means for providing light to said second means.

Another embodiment of the invention comprises a reflective display apparatus, comprising: a substrate having a plurality of reflective display elements disposed on a first surface thereof; a first material disposed over a second surface of the substrate opposite said first surface, said first material comprising a plurality of light redirectors.

Another embodiment of the invention comprises a reflective display apparatus, comprising: means for reflectively displaying; means for supporting, said means for reflectively displaying disposed on a first side of said means for supporting; means for redirecting light disposed on a second opposite side of said supporting means, said light redirecting means having a first index of refraction.

Another embodiment of the invention comprises a method of manufacturing a reflective display, comprising: positioning a plurality of interferometric modulators on a first surface of a substrate; positioning a first material over a second surface of the substrate opposite said first surface, said first material comprising a plurality of light redirectors.

Another embodiment of the invention comprises a method of manufacturing a reflective display, comprising: positioning a plurality of interferometric modulators on a substrate; and positioning a plurality of light redirectors in optical communication with said interferometeric modulators, the light redirectors configured to redirect at least a portion of the light incident on the light redirectors into the interferometric modulators.

Another embodiment of the invention comprises a system for illuminating a reflective display, comprising: a display cover configured to be placed in front of the reflective display and including a plurality of light redirectors, the display cover having a first surface configured to face the front of the reflective display, there being a gap between the first surface and the front of the display; and a light source configured to transmit light onto the first surface of the display cover along a path that is oblique to the display cover, wherein said light redirectors are configured to redirect at least a portion of the incident light onto the front of the reflective display.

Another embodiment of the invention comprises a method of illuminating a reflective display, comprising: transmitting light onto a first surface of a display cover along a path that is oblique to the cover, the first surface of the display cover facing a second surface of a reflective display, there being a gap between the first surface and the second surface; and redirecting at least a portion of said transmitted light towards the second surface of the reflective display.

Another embodiment of the invention comprises a method of manufacturing a system for illuminating a reflective display, comprising: forming a plurality of light redirectors in a cover, the cover having a first surface; positioning the cover in front of a reflective display with a gap between the first surface and the front of the display; and positioning a light source to transmit light onto the first surface of the display cover along a path that is oblique to the display cover, wherein said light redirectors are configured to redirect at least a portion of the incident light onto the front of the reflective display.

Another embodiment of the invention comprises a reflective display system, comprising: a plurality of reflective display elements; and fluorescent or phosphorescent material located in optical communication with the display elements and configured such that said material absorbs light having a first wavelength and emits light having a second wavelength different from said first wavelength into said reflective display elements.

Another embodiment of the invention comprises a reflective display system, comprising: first means for providing reflective image content; and second means for absorbing light having a first wavelength and emitting light having a second wavelength different from said first wavelength onto said first means.

Another embodiment of the invention comprises a method of illuminating a reflective display, comprising: transmitting light onto fluorescent or phosphorescent material that absorbs at least a portion of said light; and emitting from said fluorescent or phosphorescent material light having a different wavelength than said transmitted light onto reflective display elements.

Another embodiment of the invention comprises a method of manufacturing a reflective display system, comprising positioning fluorescent or phosphorescent material in optical communication with a plurality of reflective display elements, wherein said material absorbs light having a first wavelength and emits light having a second wavelength different from said first wavelength into said reflective display elements.

Another embodiment of the invention comprises an interferometric modulator display apparatus, comprising: a plurality of interferometric modulators having a front from which incident light is reflected; a plurality of at least partially optically transmissive posts supporting a reflective surface of said interferometric modulators; and a plurality of light redirectors aligned with said posts.

Another embodiment of the invention comprises an interferometric modulator display apparatus, comprising: means for providing reflective image content, said image content providing means comprising first and second means for reflecting; means for supporting said first reflecting means and separating said first reflecting means from the second reflecting means by a gap, said supporting means conducting light; and means for redirecting light conducted by said supporting means.

Another embodiment of the invention comprises an interferometric modulator display apparatus, comprising: a substrate; a plurality of interferometric modulators disposed on the substrate and having a front from which incident light is reflected; a plurality of at least partially optically transmissive posts supporting a reflective surface of said interferometric modulators; and a plurality of light redirectors disposed on or in said substrate.

Another embodiment of the invention comprises a method of illuminating a reflective display, comprising: transmitting light through a plurality of at least partially optically transmissive posts into a substrate, wherein the posts support a reflective surface in a plurality of interferometric modulators disposed on the substrate; and redirecting at least a portion of said transmitted light into said interferometric modulators.

Another embodiment of the invention comprises a method of manufacturing an interferometric modulator display, comprising: forming a plurality of at least partially optically transmissive posts to support a reflective surface in a plurality of interferometric modulators, the interferometric modulators having a front from which incident light is reflected; and positioning a plurality of light redirectors to be aligned with said posts.

### Brief Description of the Drawings

Figure 1 is an isometric view depicting a portion of one embodiment of an interferometric modulator display in which a movable reflective layer of a first interferometric modulator is in a released position and a movable reflective layer of a second interferometric modulator is in an actuated position.
Figure 2 is a system block diagram illustrating one embodiment of an electronic device incorporating a 3x3 interferometric modulator display.
Figure 3 is a diagram of movable mirror position versus applied voltage for one exemplary embodiment of an interferometric modulator of Figure 1.
Figure 4 is an illustration of a set of row and column voltages that may be used to drive an interferometric modulator display.
Figure 5A illustrates one exemplary frame of display data in the 3x3 interferometric modulator display of Figure 2.
Figure 5B illustrates one exemplary timing diagram for row and column signals that may be used to write the frame of Figure 5A.
Figure 6A is a cross section of the device of Figure 1 taken along line 6A-6A of Figure 1.
Figure 6B is a cross section taken along a line corresponding to 6A-6A in Figure 1, but illustrating an alternative embodiment of an interferometric modulator.
Figure 6C is a cross section taken along a line corresponding to 6A-6A in Figure 1, but illustrating an alternative embodiment of an interferometric modulator.
Figure 7 schematically illustrates an interferometric modulator array utilizing a front light in conjunction with a light plate to direct light into the interferometric modulator elements.
Figure 8A schematically illustrates an interferometric modulator array utilizing a backlight wherein light from the backlight is reflected into the interferometric modulator elements by reflective structures located in the posts that support the mirror element.
Figure 8B schematically illustrates another interferometric modulator array utilizing a backlight wherein light from the backlight passing through transparent posts is reflected into the interferometric modulator elements by reflective structures located in the substrate itself.
Figure 8C schematically illustrates another interferometric modulator array utilizing a backlight wherein light from the backlight passing through gaps in the array is directed into the interferometric modulator elements by reflective structures located in the substrate.
Figure 8D schematically illustrates another interferometric modulator array utilizing a backlight wherein light from the backlight passing through gaps in the array is directed into the interferometric modulator elements by reflective structures located in a film above the substrate.
Figure 8E schematically illustrates another interferometric modulator array utilizing a backlight wherein light from the backlight passing through transparent posts is scattered into the interferometric modulator elements by scattering centers located in a film above the substrate.
Figure 9 schematically illustrates a front light for an interferometric modulator array that utilizes reflective or light scattering structures attached to a cover glass.
Figure 10 schematically illustrates an interferometric modulator array in which the substrate itself is utilized as a front light.
Figures 11A schematically illustrates an embodiment of an interferometric modulator array wherein the use of side lighting in combination with angle scattering centers is used to provide light to interferometric modulator elements in an array.
Figure 11B schematically illustrates an embodiment of an interferometric modulator array wherein side lighting is used in combination with angle scattering elements that are aligned with the direction of the light source to provide light to the interferometric modulator elements.
Figures 12A schematically illustrates an interferometric modulator array that utilizes phosphorescent or fluorescent materials to improve color gamut.
Figure 12B schematically illustrates an interferometric modulator array that utilizes phosphorescent or fluorescent materials for providing light to the array, and includes a light absorbing material on the surface of the phosphorescent or fluorescent material.
Figures 13A and 13B are system block diagrams illustrating an embodiment of a visual display device comprising a plurality of interferometric modulators.

### Detailed Description of Certain Embodiments

The following detailed description is directed to certain specific embodiments of the invention. However, the invention can be embodied in a multitude of different ways. In this description, reference is made to the drawings wherein like parts are designated with like numerals throughout. As will be apparent from the following description, the invention may be implemented in any device that is configured to display an image, whether in motion (e.g., video) or stationary (e.g., still image), and whether textual or pictorial. More particularly, it is contemplated that the invention may be implemented in or associated with a variety of electronic devices such as, but not limited to, mobile telephones, wireless devices, personal data assistants (PDAs), hand-held or portable computers, GPS receivers/navigators, cameras, MP3 players, camcorders, game consoles, wrist watches, clocks, calculators, television monitors, flat panel displays, computer monitors, auto displays (e.g., odometer display, etc.), cockpit controls and/or displays, display of camera views (e.g., display of a rear view camera in a vehicle), electronic photographs, electronic billboards or signs, projectors, architectural structures, packaging, and aesthetic structures (e.g., display of images on a piece of jewelry). MEMS devices of similar structure to those described herein can also be used in non-display applications such as in electronic switching devices.

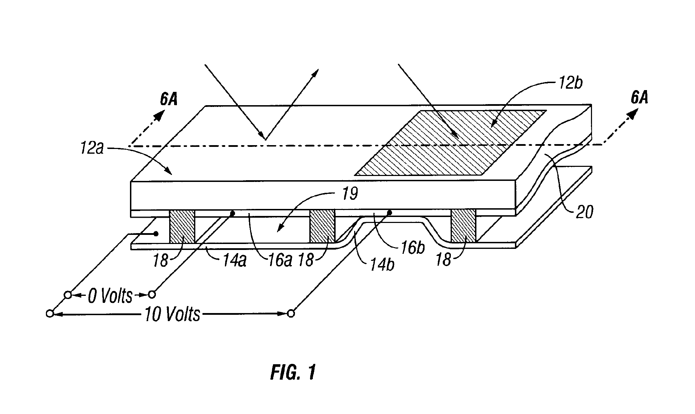

One interferometric modulator display embodiment comprising an interferometric MEMS display element is illustrated in Figure 1. In these devices, the pixels are in either a bright or dark state. In the bright ("on" or "open") state, the display element reflects a large portion of incident visible light to a user. When in the dark ("off" or "closed") state, the display element reflects little incident visible light to the user. Depending on the embodiment, the light reflectance properties of the "on" and "off" states may be reversed. MEMS pixels can be configured to reflect predominantly at selected colors, allowing for a color display in addition to black and white.

Figure 1 is an isometric view depicting two adjacent pixels in a series of pixels of a visual display, wherein each pixel comprises a MEMS interferometric modulator. In some embodiments, an interferometric modulator display comprises a row/column array of these interferometric modulators. Each interferometric modulator includes a pair of reflective layers positioned at a variable and controllable distance from each other to form a resonant optical cavity with at least one variable dimension. In one embodiment, one of the reflective layers may be moved between two positions. In the first position, referred to herein as the released state, the movable layer is positioned at a relatively large distance from a fixed partially reflective layer. In the second position, the movable layer is positioned more closely adjacent to the partially reflective layer. Incident light that reflects from the two layers interferes constructively or destructively depending on the position of the movable reflective layer, producing either an overall reflective or non-reflective state for each pixel.

The depicted portion of the pixel array in Figure 1 includes two adjacent interferometric modulators 12a and 12b. In the interferometric modulator 12a on the left, a movable and highly reflective layer 14a is illustrated in a released position at a predetermined distance from a fixed partially reflective layer 16a. In the interferometric modulator 12b on the right, the movable highly reflective layer 14b is illustrated in an actuated position adjacent to the fixed partially reflective layer 16b.

The fixed layers 16a, 16b are electrically conductive, partially transparent and partially reflective, and may be fabricated, for example, by depositing one or more layers each of chromium and indium-tin-oxide onto a transparent substrate 20. The layers are patterned into parallel strips, and may form row electrodes in a display device as described further below. The movable layers 14a, 14b may be formed as a series of parallel strips of a deposited metal layer or layers (orthogonal to the row electrodes 16a, 16b) deposited on top of posts 18 and an intervening sacrificial material deposited between the posts 18. When the sacrificial material is etched away, the deformable metal layers are separated from the fixed metal layers by a defined air gap 19. A highly conductive and reflective material such as aluminum may be used for the deformable layers, and these strips may form column electrodes in a display device.

With no applied voltage, the cavity 19 remains between the layers 14a, 16a and the deformable layer is in a mechanically relaxed state as illustrated by the pixel 12a in Figure 1. However, when a potential difference is applied to a selected row and column, the capacitor formed at the intersection of the row and column electrodes at the corresponding pixel becomes charged, and electrostatic forces pull the electrodes together. If the voltage is high enough, the movable layer is deformed and is forced against the fixed layer (a dielectric material which is not illustrated in this Figure may be deposited on the fixed layer to prevent shorting and control the separation distance) as illustrated by the pixel 12b on the right in Figure 1. The behavior is the same regardless of the polarity of the applied potential difference. In this way, row/column actuation that can control the reflective vs. non-reflective pixel states is analogous in many ways to that used in conventional LCD and other display technologies.

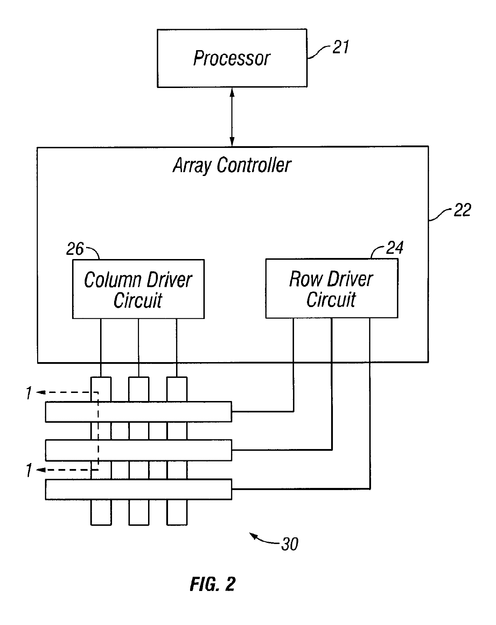

Figures 2 through 5B illustrate one exemplary process and system for using an array of interferometric modulators in a display application. Figure 2 is a system block diagram illustrating one embodiment of an electronic device that may incorporate aspects of the invention. In the exemplary embodiment, the electronic device includes a processor 21 which may be any general purpose single- or multi-chip microprocessor such as an ARM, Pentium^{®}, Pentium II^{®}, Pentium III^{®}, Pentium IV^{®}, Pentium^{®} Pro, an 8051, a MIPS^{®}, a Power PC^{®}, an ALPHA^{®}, or any special purpose microprocessor such as a digital signal processor, microcontroller, or a programmable gate array. As is conventional in the art, the processor 21 may be configured to execute one or more software modules. In addition to executing an operating system, the processor may be configured to execute one or more software applications, including a web browser, a telephone application, an email program, or any other software application.

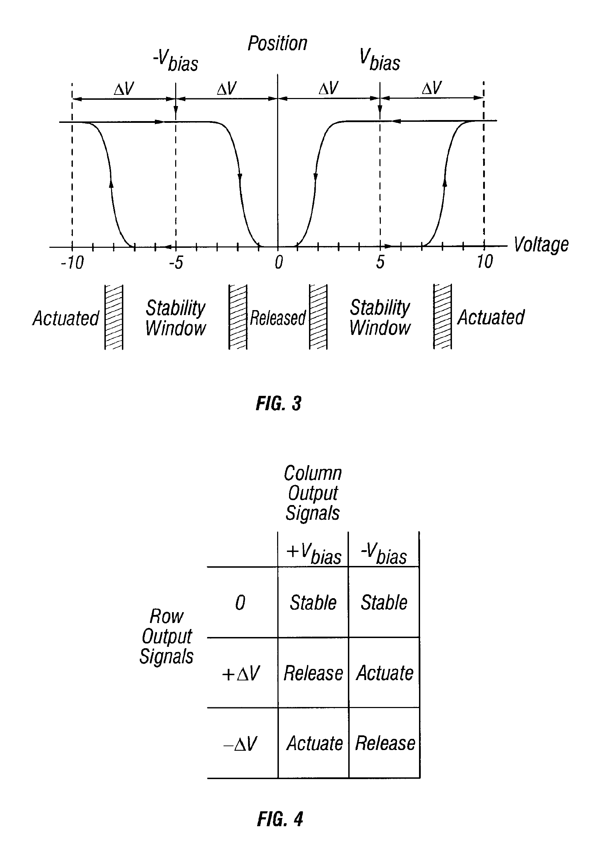

In one embodiment, the processor 21 is also configured to communicate with an array controller 22. In one embodiment, the array controller 22 includes a row driver circuit 24 and a column driver circuit 26 that provide signals to a pixel array 30. The cross section of the array illustrated in Figure 1 is shown by the lines 1-1 in Figure 2. For MEMS interferometric modulators, the row/column actuation protocol may take advantage of a hysteresis property of these devices illustrated in Figure 3. It may require, for example, a 10 volt potential difference to cause a movable layer to deform from the released state to the actuated state. However, when the voltage is reduced from that value, the movable layer maintains its state as the voltage drops back below 10 volts. In the exemplary embodiment of Figure 3, the movable layer does not release completely until the voltage drops below 2 volts. There is thus a range of voltage, about 3 to 7 V in the example illustrated in Figure 3, where there exists a window of applied voltage within which the device is stable in either the released or actuated state. This is referred to herein as the "hysteresis window" or "stability window." For a display array having the hysteresis characteristics of Figure 3, the row/column actuation protocol can be designed such that during row strobing, pixels in the strobed row that are to be actuated are exposed to a voltage difference of about 10 volts, and pixels that are to be released are exposed to a voltage difference of close to zero volts. After the strobe, the pixels are exposed to a steady state voltage difference of about 5 volts such that they remain in whatever state the row strobe put them in. After being written, each pixel sees a potential difference within the "stability window" of 3-7 volts in this example. This feature makes the pixel design illustrated in Figure 1 stable under the same applied voltage conditions in either an actuated or released pre-existing state. Since each pixel of the interferometric modulator, whether in the actuated or released state, is essentially a capacitor formed by the fixed and moving reflective layers, this stable state can be held at a voltage within the hysteresis window with almost no power dissipation. Essentially no current flows into the pixel if the applied potential is fixed.

In typical applications, a display frame may be created by asserting the set of column electrodes in accordance with the desired set of actuated pixels in the first row. A row pulse is then applied to the row 1 electrode, actuating the pixels corresponding to the asserted column lines. The asserted set of column electrodes is then changed to correspond to the desired set of actuated pixels in the second row. A pulse is then applied to the row 2 electrode, actuating the appropriate pixels in row 2 in accordance with the asserted column electrodes. The row 1 pixels are unaffected by the row 2 pulse, and remain in the state they were set to during the row 1 pulse. This may be repeated for the entire series of rows in a sequential fashion to produce the frame. Generally, the frames are refreshed and/or updated with new display data by continually repeating this process at some desired number of frames per second. A wide variety of protocols for driving row and column electrodes of pixel arrays to produce display frames are also well known and may be used in conjunction with the present invention.

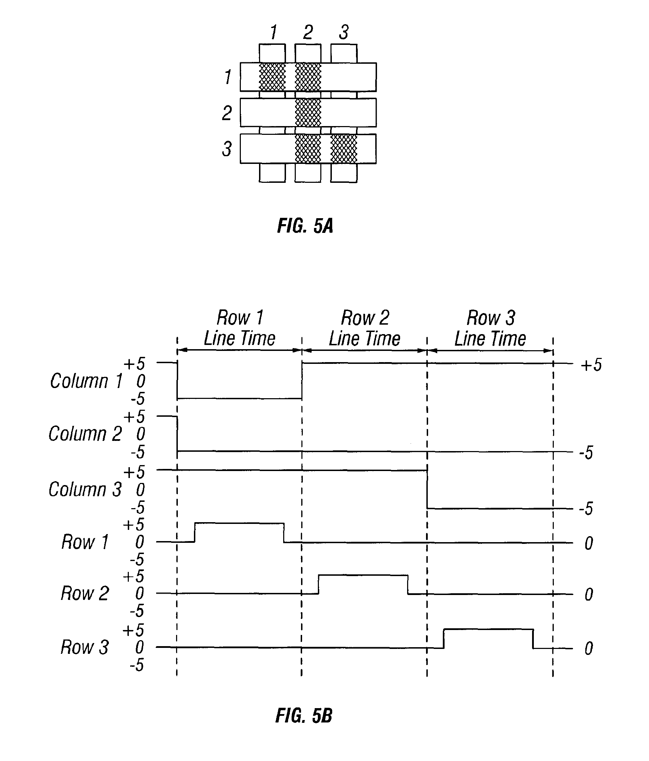

Figures 4, 5A, and 5B illustrate one possible actuation protocol for creating a display frame on the 3x3 array of Figure 2. Figure 4 illustrates a possible set of column and row voltage levels that may be used for pixels exhibiting the hysteresis curves of Figure 3. In the Figure 4 embodiment, actuating a pixel involves setting the appropriate column to -V_{bias}, and the appropriate row to +ΔV, which may correspond to -5 volts and +5 volts respectively Releasing the pixel is accomplished by setting the appropriate column to +V_{bias}, and the appropriate row to the same +ΔV, producing a zero volt potential difference across the pixel. In those rows where the row voltage is held at zero volts, the pixels are stable in whatever state they were originally in, regardless of whether the column is at +V_{bias}, or V_{bias}.

Figure 5B is a timing diagram showing a series of row and column signals applied to the 3x3 array of Figure 2 which will result in the display arrangement illustrated in Figure 5A, where actuated pixels are non-reflective. Prior to writing the frame illustrated in Figure 5A, the pixels can be in any state, and in this example, all the rows are at 0 volts, and all the columns are at +5 volts. With these applied voltages, all pixels are stable in their existing actuated or released states.

In the Figure 5A frame, pixels (1,1), (1,2), (2,2), (3,2) and (3,3) are actuated. To accomplish this, during a "line time" for row 1, columns 1 and 2 are set to -5 volts, and column 3 is set to +5 volts. This does not change the state of any pixels, because all the pixels remain in the 3-7 volt stability window. Row 1 is then strobed with a pulse that goes from 0, up to 5 volts, and back to zero. This actuates the (1,1) and (1,2) pixels and releases the (1,3) pixel. No other pixels in the array are affected. To set row 2 as desired, column 2 is set to -5 volts, and columns 1 and 3 are set to +5 volts. The same strobe applied to row 2 will then actuate pixel (2,2) and release pixels (2,1) and (2,3). Again, no other pixels of the array are affected. Row 3 is similarly set by setting columns 2 and 3 to -5 volts, and column 1 to +5 volts. The row 3 strobe sets the row 3 pixels as shown in Figure 5A. After writing the frame, the row potentials are zero, and the column potentials can remain at either +5 or -5 volts, and the display is then stable in the arrangement of Figure 5A. It will be appreciated that the same procedure can be employed for arrays of dozens or hundreds of rows and columns. It will also be appreciated that the timing, sequence, and levels of voltages used to perform row and column actuation can be varied widely within the general principles outlined above, and the above example is exemplary only, and any actuation voltage method can be used with the present invention.

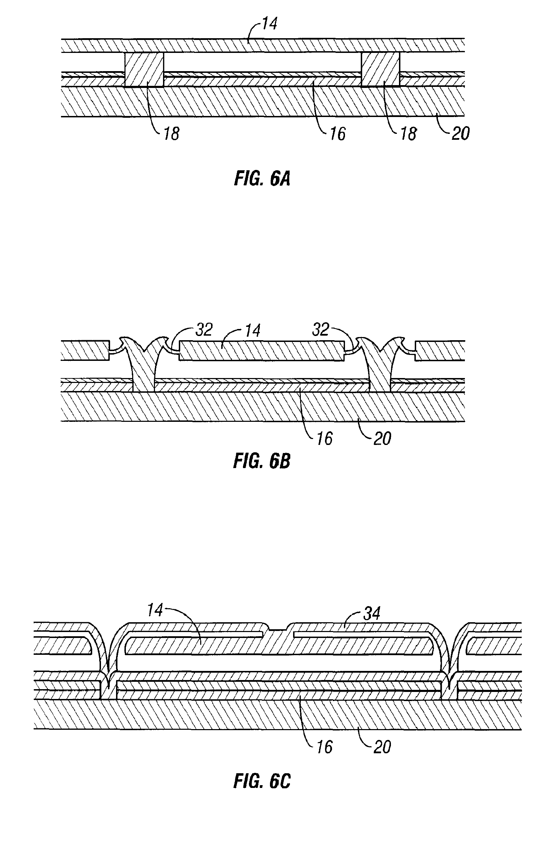

The details of the structure of interferometric modulators that operate in accordance with the principles set forth above may vary widely. For example, Figures 6A-6C illustrate three different embodiments of the moving mirror structure. Figure 6A is a cross section of the embodiment of Figure 1, where a strip of metal material 14 is deposited on orthogonally extending supports 18. In Figure 6B, the moveable reflective material 14 is attached to supports at the corners only, on tethers 32. In Figure 6C, the moveable reflective material 14 is suspended from a deformable layer 34. This embodiment has benefits because the structural design and materials used for the reflective material 14 can be optimized with respect to the optical properties, and the structural design and materials used for the deformable layer 34 can be optimized with respect to desired mechanical properties. The production of various types of interferometric devices is described in a variety of published documents, including, for example, U.S. Published Application 2004/0051929. A wide variety of well known techniques may be used to produce the above described structures involving a series of material deposition, patterning, and etching steps.

Generally, the interferometric modulator is utilized in a highly reflective, direct view, flat panel display. Because of its high reflectivity, the interferometric modulator has little need for illumination in most lighting conditions. The typical consumer expects to be able to read electronic displays in certain situations where there is little ambient illumination. As a result, some form of illumination is desirable for the interferometric modulator and other purely reflective spatial light modulators that typically use ambient illumination.

The typical backside illumination techniques used extensively with liquid crystal displays (LCDs) do not work for purely reflective spatial light modulators. A purely reflective spatial light modulator is one through which light cannot be transmitted from back to front in such a manner as to illuminate the modulator elements. It is possible to leave gaps between the elements of a purely reflective spatial light modulator to allow backside illumination to travel through and emerge at the front of the panel, but the light will not contain any image information, as the light does not actually illuminate the elements, passing them by on its path through the display panel. Thus, it is desirable to provide illumination directed to the front of reflective display elements in reflective displays.

As described in more detail below, various embodiments of the invention provide light redirectors to redirect light from a light source positioned at various locations in a reflective display so that the light is directed onto the front of reflective display elements in the reflective display.

### Directed Frontlight

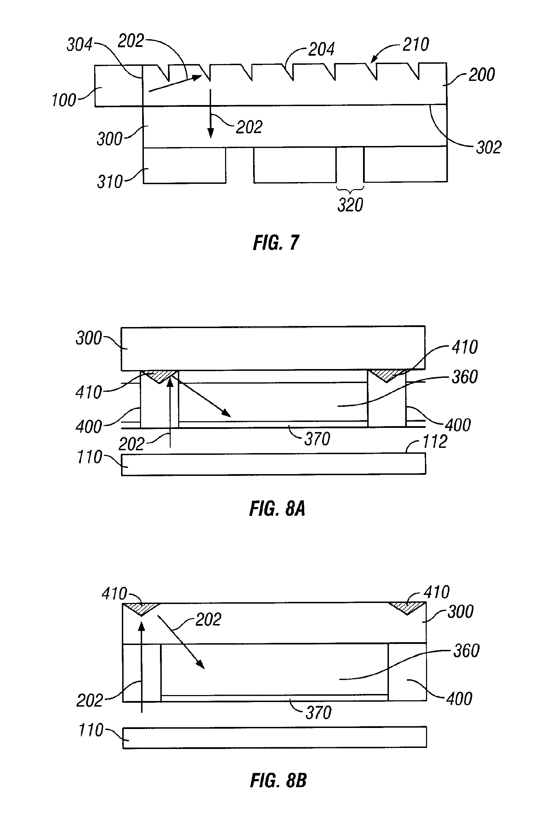

In one embodiment, illustrated in Figure 7, a directed front light is utilized in conjunction with an array of interferometric modulators. A front light plate 200 is attached to a front surface 302 of the substrate 300. Although the front light plate 200 is shown attached directly to the substrate 300, in other embodiments the light plate 200 can be suspended above the substrate 300 or attached to a film or other layer that overlies the substrate.

A light source 100, such as an LED, is connected to the front light plate 200 such that light 202 emitted from the light source 100 enters the front light plate 200. In the embodiment illustrated in Figure 7, the light source 100 is connected to a side surface 304 of the front light plate 200. The structure of the front light plate 200 is optimized so that light 202 passing from light source 100 into the front light plate 200 is redirected into the elements 310 of the array. Although a single ray 202 of light is depicted in Figure 7 and subsequent figures, it should be understood that light source 100 emits a beam of light having a given divergence and thus fills the entire front light plate 200 with light. Accordingly, light redirected into elements 310 will consist of a plurality of beams. Preferably the light 202 is directed into the elements 310 of the array in as narrow beams as possible. Thus, as used herein, the term "light 202" represents beams of light and illustrates one of numerous light paths within those beams.

In one embodiment, light 202 emitted by light source 100 is maintained within the front light plate 200 by total internal reflection until the light 202 contacts the surfaces 204, from which it is reflected through the substrate 300 and into the elements 310. The light plate 200 may comprise a number of grooves 210 that provide surfaces 204 off of which light 202 may be reflected. Advantageously, light 202 may be redirected into the elements 310 in a narrow beam that is substantially perpendicular to the front surface of the substrate 300. Advantageously, the majority of light 202 that is directed into elements 310 is reflected out of the elements 310 and transmitted through the substrate 300 and light plate 200 without being significantly affected by the grooves 210.

In one embodiment, the elements 310 are interferometric modulators. In other embodiments the elements are other optical devices capable of reflecting light of a desired wavelength. By directing the light 202 from the front light 100 directly into the interferometric modulator elements 310, the brightness of the display is increased compared to use of ambient light alone, particularly in situations in which there is limited ambient light. In addition, this arrangement allows for the use of the display in situations in which there is little or no ambient light.

In the embodiment illustrated in Figure 7, because the majority of the light 202 is reflected out of the interferometric modulator elements 310 at an angle substantially perpendicular to the front surface substrate 300, the view angle is relatively narrow. However, by changing the depth and spacing of the grooves 210 or by utilizing other structures, the incident angle of the light 202 into the interferometric modulator elements 310 can be controlled. For example, by changing the angle of the sloped side 204 of the illustrated grooves 210, the angle of light directed into the interferometric modulator can be controlled. Thus, the viewing angle can be controlled. In addition to grooves, one of skill in the art will recognize that other structures can be utilized in the light plate 200 to redirect light from the light source 100 into the elements 310 at the desired angle. For example, strips of reflective material may be incorporated within the front light plate 200 at a diagonal angle.

A front light plate 200 containing grooves 210 may be constructed by injection molding, controlled etching, or by any other process known to those of skill in the art. The material for use in the front light plate 200 may be any suitable transparent or partially transparent material such as plastic or glass.

In one embodiment, the reflecting structures 210 are spaced such that light is directed to the elements 310 and not to the gap between the elements 320.

In another embodiment, instead of grooves 210, lines of reflective material may be placed within or on front light plate 200 to provide light redirection into elements 310.

In one embodiment, the front light plate 200 may be placed against the substrate 300 as depicted in Figure 7. In another embodiment, the front light plate 200 may be position such that there is a space between the plate 200 and the substrate 300.

The light source 100, as well as other light sources described herein, may be any suitable light source known in the art. Non-limiting examples include LEDs or fluorescent lights such as Cold Compact Fluorescent Lights.

### Backlit interferometric modulator

In another embodiment, a backlight is used to provide light to an array of interferometric modulator elements. The use of a backlight to enhance the function of an interferometric modulator display may be desirable, for example, in a device that already utilizes a backlight, such as a cellular phone.

An embodiment of an interferometric modulator utilizing a backlight is illustrated in Figure 8A. A backlight 110 is located on the opposite side of the interferometric modulator structure from the substrate 300 and is oriented so that its light emitting surface 112 is parallel to and faces the substrate 300. A mirror element 370 is suspended below the substrate 300 by posts 400. Because in one embodiment the mirror element 370 is opaque, light can not travel from the backlight 110 directly into the interferometric modulator cavity 360. Thus, in this embodiment the posts 400 are constructed of a transparent or partially transparent material and a light redirector 410 is located at the end of the posts 400 closest to the substrate 300. Light 202 transmitted from the backlight 110 passes through the posts 400 and is redirected by the light redirector 410 into the cavity 360 of the interferometric modulator structure. The light 202 then reflects off the mirror 370 and eventually exits the interferometric modulator structure through the substrate 300 in the direction of a viewer 50.

The light redirector 410 may include a reflective structure, light scattering structures such as a plurality of scattering centers, phosphorescent or fluorescent material, or any other suitable feature configured to redirect light. Transparent posts 400 may be constructed of any suitable transparent or partially transparent material such as a transparent oxide or polymer, and may be colorless or include a color tint. In one advantageous embodiment, posts 400 are colorless and transparent. Light redirectors 410 may be incorporated in any desired position within transparent posts 400 by which light may be appropriately directed into the interferometric modulators.

In the embodiment illustrated in Figure 8A, the light redirector 410 comprises diagonally oriented mirrors arranged as a metallic pyramid. Other structures that reflect light into the cavity 360 could also be used. For example, a curved structure could be used in place of the pyramid to get broader reflectance into the cavity 360. Alternatively, a triangular structure could provide reflectance into a single interferometric cavity. The light redirector 410 can be made by any process known in the art. For example, they may be constructed by forming a pyramid shaped channel in the top of the post and subsequently filling the channel with a reflective substance. In one embodiment, the light redirector 410 is constructed of aluminum. In one embodiment, the reflective material (e.g., aluminum) may be deposited as a layer on a structure having the desired shape. For example, a pyramid shape may be formed by controlled etching of silicon or molybdenum followed by deposition of an aluminum layer on the pyramid shape.

In an alternative embodiment, the light redirector 410 is located in the substrate 300 rather than in the post 400 (Figure 8B). In the embodiment illustrated in Figure 8B, the light redirectors 410 in substrate 300 are aligned above posts 400. In this case, light 202 travels from the backlight 110 through the post 400 to light redirector 410 located in or on the substrate 300 directly above the post 400. The light is reflected off of the light redirector 410 and back into the cavity 360. The light redirector 410 may be, for example, a groove in the glass 300 that is silvered or filled with a reflective substance. In one embodiment, the grooves in the substrate 300 may be formed by etching and the surfaces of the grooves may be coated with a reflective material such as aluminum. In another embodiment, the grooves may be filled with polymer containing reflective or scattering particles. For example, the polymer may be deposited by spin coating.

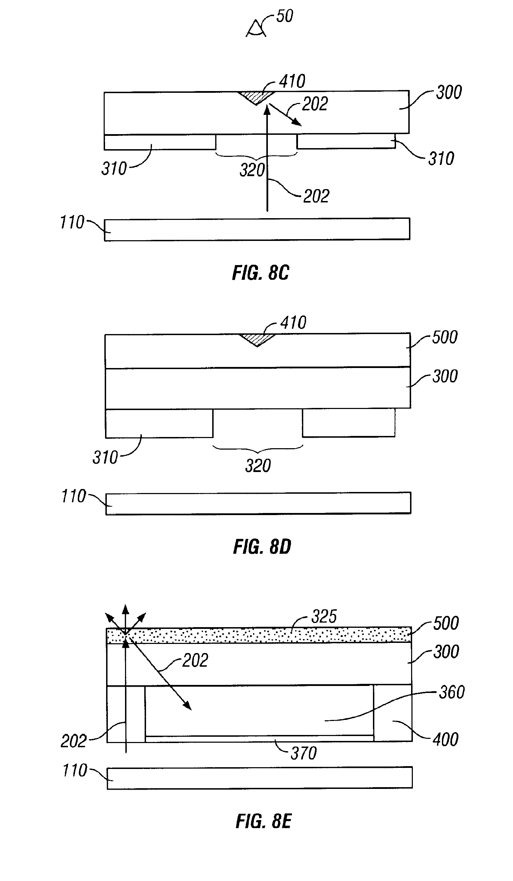

In another embodiment, light redirectors 410 may be positioned in the substrate 300 above gaps 320 between individual interferometric modulator elements 310. Light 202 from a backlight 110 can then pass through the very small gaps 320 to the light redirectors 410, as illustrated in Figure 8C. Light 202 from the backlight 110 passes through the gaps 320 and is reflected from the light redirectors 410 into the interferometric modulator elements 310. As discussed above, the light redirectors 410 may be diagonal mirrors formed by creating a groove in the substrate and filling the groove with a reflective material. Alternative ways of forming the light redirectors 410 will be apparent to the skilled artisan.

In another embodiment, light redirectors 410 are formed above the substrate 300 (Figure 8D). For example, the light redirectors 410 may be formed in a film 500 that is applied to the surface of the substrate 300. In one embodiment the film 500 is a diffuser or anti-reflective film. The film 500 may be located on the substrate 300 such that the light redirectors 410 are positioned directly above the gaps 320 between elements 310 in the array. As in the embodiments discussed above, the light redirectors 410 can be any shape and material that serves to reflect light back into the interferometric modulator elements 310 below. In some embodiments, the light redirectors comprise scattering centers or phosphorescent or fluorescent material deposited within the film 500. Film 500 may be deposited by lamination, spin coating, or any other suitable means.

In an alternative embodiment, light redirectors 410 may be uniformly distributed throughout film 500 in low density. Thus, for example with reference to Figure 8E, a powder of light scattering centers 325 may be distributed throughout film 500. The portion of the light scattering centers 325 positioned above gap 320 or posts 400 may redirect light 202 from back light 110 into interferometric modulator elements 310. However, because the powder 325 is thinly distributed in film 500, it will not significantly interfere with ambient illumination of the interferometric modulators 310.

In each of the embodiments utilizing a backlight described above, the nature of the light redirectors 410 can be manipulated to achieve a desired result, such as by changing the angle of diagonal mirrors or by utilizing a curved surface rather than a straight mirror. For example, the shape of a reflective structure can be modified to produce a narrower or broader reflected light beam. A reflective structure producing a broader reflected beam may be utilized in situations where a wider view angle is needed, while a structure with a narrower reflected beam may be used in a situation where maximum brightness from a more limited view angle is desirable.

In addition, in each of the embodiments an absorbing material may be preferably located above the light redirectors to form a black mask on top. Such a mask would prevent ambient light from reflecting from the light redirectors 410 back toward the viewer 50, which would decrease contrast.

### Remote Front Lighting Via Cover Glass Features

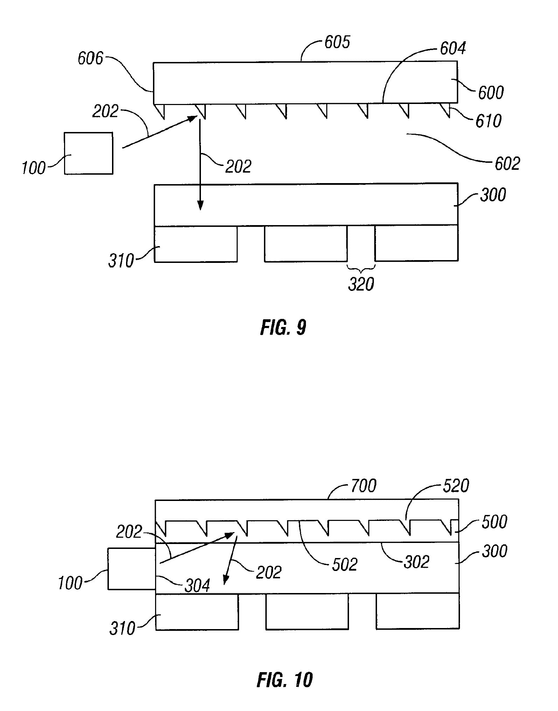

In many display applications, a cover glass or plastic is inserted above the display to protect the display (e.g., the surface plastic over the display in a cell phone). Figure 9 depicts an embodiment where light redirectors 610 may be located on a cover 600 to provide illumination of reflective displays. Typically, an air gap 602 exists between the cover 600 and the substrate 300 of the display. Light 202 from a light source 100 may be directed into the gap 602 and onto the bottom surface 604 of the cover 600. Alternatively, the light 202 may be directed into a side 606 of the cover 600. When light 202 is directed into the side 606 of the cover 600, the light redirectors 610 may be located within the cover 600. Light redirectors 610 in or on the cover 600 may be utilized to redirect light 202 from the light source 100 into the substrate 300 and into interferometric modulator elements 310 located on the substrate 300. In this way, the majority of the light 202 from the light source 100 enters the elements 310 at an acute angle rather than at a shallow angle. Light entering and exiting the interferometric modulator elements 310 at an acute angle cause light 202 with display information to be directed along a typical viewer's line of sight-normal to the display. In the illustrated embodiment, because the majority of the light is reflected out of the interferometric modulator elements at a narrow angle, the view angle is relatively narrow. Thus, the brightness of the display will rapidly drop at wider view angles, reducing the observation of the effect of color shifting, which can typically be observed from interferometric modulator elements upon off-angle viewing.

Light redirectors 610 may be reflective structures, scattering centers, fluorescent or phosphorescent material, or any other suitable light redirector. The shape of reflective structure light redirectors may be selected to direct the light 202 in the desired way. The structural features may be reflective, or may serve as diffusive scattering centers that scatter light in all directions, including into the interferometric modulator elements. By changing the shape and depth of the features, the reflectance can be adjusted. For example, a diagonal structure will direct the light 202 into the elements 310 along a narrow beam as discussed above. However, if a structure with a curved surface is utilized (not shown), a broader reflected beam will result. A broader beam may be desired, for example, to achieve a wider view angle. However, it may be desirable to narrow the dispersion angle of the beam to limit the observation of color shifting upon off-angle angle. Thus, in one embodiment, the dispersion angle of the beam is optimized by adjusting the shape of light redirectors 610 to provide an optimum balance between view angle and low observation of color shifting. One of skill in the art will readily understand the type of structure to produce the desired reflectance for a given situation.

Light redirectors 610 may be formed on the cover 600 by applying a film or coating comprising the light redirectors 610 to the bottom surface 604 of the cover 600. Thus, the light redirectors 610 may be disposed within a laminate on the cover 600. In one embodiment, the light redirectors 610 may be patterned onto the bottom of the cover 600 such as by using photolithography to pattern and etch features on the cover 600. The features may include projections, such as illustrated in Figure 9 or depressions such as grooves described above etched into the bottom surface 604 of the cover 600. In one embodiment, the light redirectors 610 are spaced such that light 202 from light source 100 is directed preferentially to the elements 310 and not to the gap 320 between the elements 310. In other embodiments, the light redirectors 610 are uniformly distributed on the cover 600. Light redirectors 610 may also be formed within the cover 600 by forming grooves in the cover 600 such as described above and adding a layer of material to fill in the grooves and protect them from dirt and debris. In this way, the light redirectors 610 (e.g., grooves) may be positioned either near the top surface 605 or the bottom surface 604 of the cover 600. Alternatively, light redirectors 610 may be embedded within the cover such as by floating light redirectors 610 in the plastic or glass of the cover 600. In one embodiment, a plurality of scattering centers are uniformly distributed throughout the cover 600.

Light 202 from the light source 100 may be directed to be incident on the bottom surface 604 of cover 600. Thus, the light source 100 may be positioned between the substrate 300 and the cover 600 as illustrated in Figure 9. Alternatively, the light source 100 may be positioned to the side of the substrate 300 or to the side and below the substrate 300, provided that light 202 is still incident on the bottom of the cover 600. In another embodiment, the light source 100 may be positioned at or on the side of the cover 600 such that light is directed into the side 606 of the cover 600. In such a case, light redirectors 610 may be positioned within the cover 600 such as described above.

Preferably the light 202 is directed into the elements 310 of the array in as narrow a beam as possible. Again, by directing the light 202 from the light source 100 into the interferometric modulator elements 310 at a substantially perpendicular angle, light 202 with display information will be directed along a typical viewer's line of sight-normal to the display. Furthermore, a narrow dispersion angle for the beam decreases the observation of color shifting upon off-angle angle.

### Substrate as Front Light

In other embodiments, the transparent substrate 300 itself is utilized as a front light. A particular embodiment of this configuration is illustrated in Figure 10. A light source 100, such as an LED, is attached to a side 304 of the substrate 300. Light 202 from the light source 100 enters the substrate 300 through the side 304 is contained within the substrate 300 as a result of total internal reflection. A film 500 is positioned on the front surface 302 of the substrate 300. The refractive index of the film 500 is matched to that of the substrate 300 such that light 202 may move into the film 500 without reflection from the interface between the film 500 and the substrate 300. The film 500 contains grooves 520 in the surface 502 opposite the substrate 300. In the film 500, light encounters the grooves 520, which provide surfaces for internal reflect that directs the light 202 downward through substrate 300 into the interferometric modulator elements 310. As discussed above, with regard to a grooved front plate, the shape, depth and spacing of the grooves 520 can be adjusted to achieve the desired dispersion angle of the light beams 202 and thus the desired cone of reflectance. In this way, the view angle can be adjusted as necessary for a particular application. In other embodiments, the film 500 may comprise scattering centers or fluorescent or phosphorescent material to redirect the light 202. The film 500 may be deposited by lamination, spin coating or any other suitable technique.

In some embodiments, a second film 700 is placed over the first film 500. In one embodiment, the second film 700 has an index of refraction that is less than the index of refraction of the first film 500 in order to provide internal reflective surfaces for reflecting light into the interferometric modulator elements 310. In one advantageous embodiment, the index of refraction of the second film 700 is close to the index of refraction of air. The second film 700 protects the first film 500 and in particular the grooves 520, for example by keeping dirt and debris out of the grooves 520.

An alternative embodiment that uses the substrate 300 as the front light comprises replacement of the grooves 520 by a phosphorescent or fluorescent material. In this embodiment, the light is redirected through absorption and re-emission by these materials. In a typical case, the light source 100 is a blue/UV LED and the phosphor will absorb light of this wavelength and reemit green or white light.

### Side Lighting with Scattering Centers

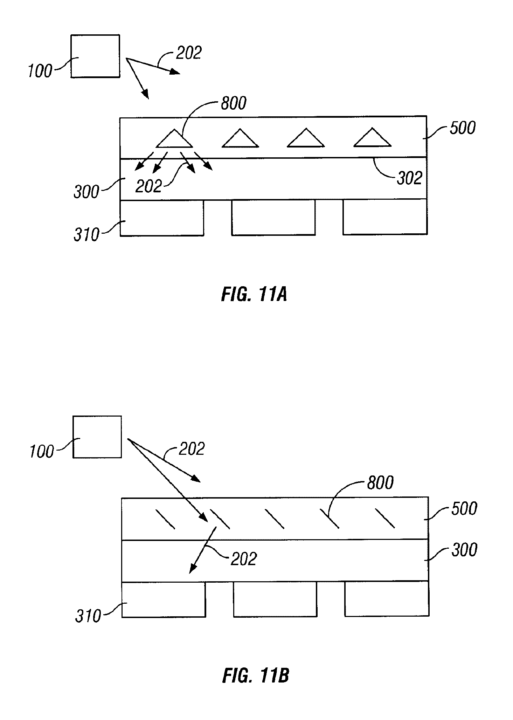

Scattering centers can be used to redirect light received from a light source located at the side of an interferometric modulator array into the interferometric modulator elements. Scattering centers scatter incident light in multiple directions. These centers may comprise particles, such a metallic particles, with uneven surfaces. In the embodiment illustrated in Figure 11A, the scattering centers 800 are located in a film 500 that is attached to the front surface 302 of the substrate 300. The film may be attached to substrate 300 by lamination, spin coating, or any other suitable method.

Light 202 from a side light source 100, such as an LED, is directed along a path that is oblique to the interferometric modulator elements and hits the scattering centers 800. From the scattering centers 800, the light 202 is scattered in multiple directions. Multiple scatterings from multiple scattering centers 800 increase the broad distribution of light direction emitted from the film 500. Some of the light 202 is directed through the substrate 300 into the interferometric modulator elements 310.

In an alternative embodiment, the scattering particles 800 have a shape suitable for preferentially scattering light in a specific direction. Such particles may be aligned relative to the direction of the light source 100 and the interferometric modulator elements 310 such that light from the light source 100 is preferentially directed into the interferometric modulator elements 310, as illustrated in Figure 11B. However, it is not necessary to direct all light from the light source into the elements. Rather, it is sufficient to change the direction of some of the light from the light source 100 such that it enters the elements 310.

In some embodiments, the angle scattering centers 800 are located within the film 500. For example, metal particles or flakes can be incorporated into the film 500. In other embodiments, surface features are incorporated in the film 500 that cause light hitting the features to be scattered. In one embodiment the surface features are roughened areas that cause light scattering. In other embodiments the surface features are geometric structures that cause light scattering.

The aligned scattering centers 800 in Figure 11B may be constructed by laminating successive layers of material with the scattering material deposited between each layer. The layered material may then be cut at a desired angle to form a thin piece of material that has the scattering material formed into stripes oriented at the desired angle. The thin material may then be laminated unto the substrate 300.

Alternatively, reflective material or fluorescent or phosphorescent material may be used as light redirectors instead of scattering centers.

### Enhanced Color Gamut

As discussed in the various embodiments above, the light redirectors may include phosphorescent or fluorescent material. Such material absorbs incident light and then reemits light at a different frequency. This characteristic may be used to enhance the color gamut of the light provided to a reflective display.

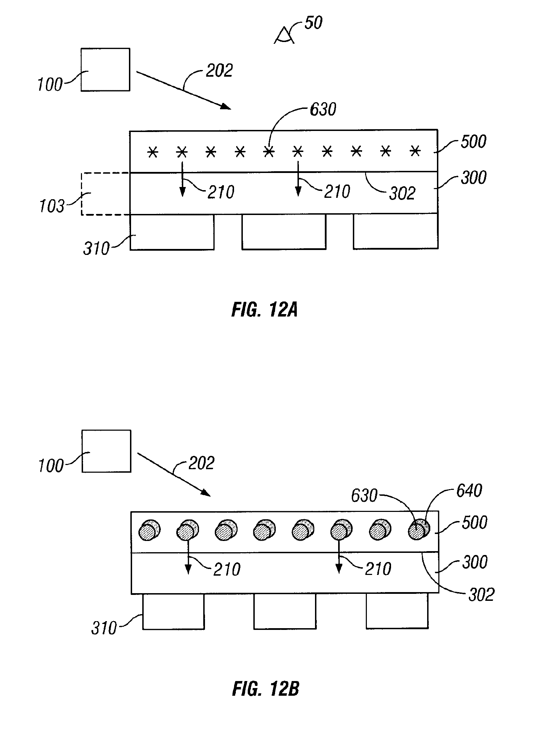

As illustrated in Figure 12A, a phosphorescent material or fluorescent material 630 which emits a particular wavelength of light can be located over the front surface 302 of substrate 300. The phosphorescent or fluorescent material 630 is excited by light form a light source 100. Although the illustrated light source 100 is configured as a side light, a light source may be provided in any location such that the light is able to excite the phosphorescent or fluorescent material 630. For example, a light source 103 may be used that provides light 202 directly into the substrate 300. The phosphorescent or fluorescent material 630 absorbs energy from the light 202 and then emits light of a particular wavelength 210 into the interferometric modulator elements 310. Generally, light 202 from the phosphorescent or fluorescent material 630 is emitted with a narrower spectrum of wavelengths than the light 202 from the light source 100, giving more control of the wavelength of light being reflected from the interferometric modulator to the viewer 50 and hence better control of the color.

The phosphorescent or fluorescent material 630 is selected to emit light of a desired wavelength. The material may combine a single phosphor or fluorphor, or may comprise a combination of two or more phospors, fluorophors, or a mixture of phospohors and fluorophors. In one embodiment, the material comprises three different materials that emit at three different wavelengths. For example, the phosphorescent material 630 may comprise three or more phosphors to provide red, green and blue light in narrow lines. The particular phosphors and/or fluorophors to be used may be selected by one of skill in the art based on the desired application. A wide variety of phosphors and fluorophors, including those emitting red, green and blue visible light, are well known in the art and are available commercially, for example from Global Trade Alliance, Inc. (Scottsdale, AZ).

In addition, the light source 100 is preferably selected to provide sufficient excitation of the phosphors or fluorophors in the material 630 such that light of the desired wavelength is emitted. In one embodiment the light source 100 is a visible light. In one embodiment, the light source 100 is a source of ultraviolet radiation. In one embodiment, the light source 100 is a light emitting diode (LED). Preferably the LED is a blue LED. In a particular embodiment the LED emits light with a wavelength between about 300 and about 400 nm.

The phosphorescent and/or fluorescent material 630 may be applied to the surface of a substrate 300 by incorporation in a film 500 that is attached to the substrate surface as illustrated. In other embodiments, the phosphorescent material is attached directly to a surface of the substrate, either on the top or bottom surfaces, or is incorporated in the substrate itself. Fluorophors or phosphors may be incorporated into a glass substrate or a film by floating the material in the glass or film material during manufacture. As described earlier, films may be applied to the substrate via lamination or spin coating. Those of skill in the art will appreciate other methods for incorporating fluorophors or phosphors within a display.

One of skill in the art will recognize that the material 630 can be chosen to provide broad wavelength illumination as well. Thus, in some embodiments the material 630 is used to provide the necessary illumination to light a display in dark or very low ambient light conditions. In a particular embodiment, the light source 103 used to excite the phosphor material 630 is directly coupled to the substrate 300 as illustrated in Figure 12A. In a typical case the light source 100/103 is a blue/UV LED and the phosphor material 630 will absorb light of this wavelength and reemit white light. In yet another alternative embodiment, the supplemental illumination results from coating the interior walls of the display case with the phosphor material 630. The display case (not shown) holds the substrate 300 and associated interferometric modulator elements 310. In this embodiment the light source 100 is directed toward the walls of the display case rather than toward the front of the display.

In another embodiment illustrated in Figure 12B, a light absorbent coating 640 may be applied to a portion of the surface of phosphorescent and/or fluorescent material 630. For example, the coating 640 may be preferentially applied to the sides of the phosphorescent and/or fluorescent material 630 opposite the light source 100. The coating 640 may absorb light 202 emitted by light source 100 and/or the light 210 emitted by the phosphorescent and/or fluorescent material 630. Absorption of light by coating 640 results in more directional illumination of the interferometric modulator elements 310, thereby improving contrast. For example, rather than emitting light in all directions, the material 630 with coating 640 may only emit light towards the interferometric modulator elements 310 because the coating 640 will absorb light emitted from the material 630 in other directions.

The color gamut may also be enhanced by the use of LED line illumination. In this embodiment, a light source that emits a narrow line of a particular wavelength or wavelengths of light is utilized. Because the wavelength of the light entering the interferometric modulator structure is restricted, the color gamut is enhanced. In addition, changes in color with view angle (view angle shift) is minimized. In one embodiment the light source is an LED that emits red, green and blue light in narrow lines.

A light source that emits defined wavelengths of light can be used in conjunction with any of the embodiments described herein for directing light from a front light source into the interferometric modulator structure. For example, an LED that emits light of a particular wavelength or wavelengths can be used as the light source 100 in the structures illustrated in Figures 7, 9, and 12 described above.

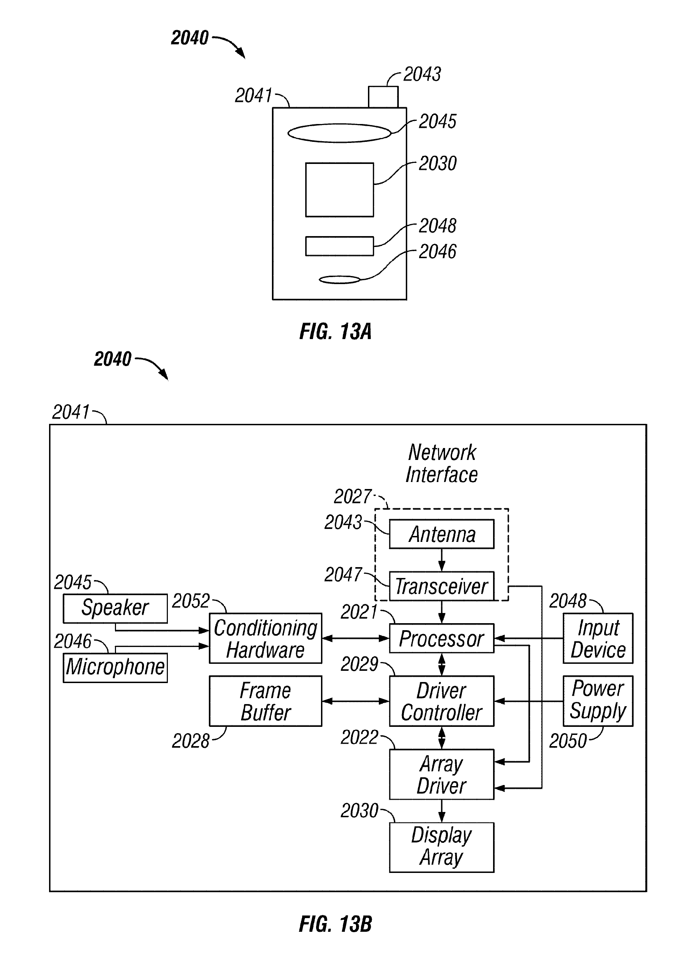

Figures 13A and 13B are system block diagrams illustrating an embodiment of a display device 2040. The display device 2040 can be, for example, a cellular or mobile telephone. However, the same components of display device 2040 or slight variations thereof are also illustrative of various types of display devices such as televisions and portable media players.

The display device 2040 includes a housing 2041, a display 2030, an antenna 2043, a speaker 2045, an input device 2048, and a microphone 2046. The housing 2041 is generally formed from any of a variety of manufacturing processes as are well known to those of skill in the art, including injection molding, and vacuum forming. In addition, the housing 2041 may be made from any of a variety of materials, including but not limited to plastic, metal, glass, rubber, and ceramic, or a combination thereof. In one embodiment the housing 2041 includes removable portions (not shown) that may be interchanged with other removable portions of different color, or containing different logos, pictures, or symbols.

The display 2030 of exemplary display device 2040 may be any of a variety of displays, including a bi-stable display, as described herein. In other embodiments, the display 2030 includes a flat-panel display, such as plasma, EL, OLED, STN LCD, or TFT LCD as described above, or a non-flat-panel display, such as a CRT or other tube device, as is well known to those of skill in the art. However, for purposes of describing the present embodiment, the display 2030 includes an interferometric modulator display, as described herein.

The components of one embodiment of exemplary display device 2040 are schematically illustrated in Figure 13B. The illustrated exemplary display device 2040 includes a housing 2041 and can include additional components at least partially enclosed therein. For example, in one embodiment, the exemplary display device 2040 includes a network interface 2027 that includes an antenna 2043 which is coupled to a transceiver 2047. The transceiver 2047 is connected to the processor 2021, which is connected to conditioning hardware 2052. The conditioning hardware 2052 may be configured to condition a signal (e.g. filter a signal). The conditioning hardware 2052 is connected to a speaker 2045 and a microphone 2046. The processor 2021 is also connected to an input device 2048 and a driver controller 2029. The driver controller 2029 is coupled to a frame buffer 2028 and to the array driver 2022, which in turn is coupled to a display array 2030. A power supply 2050 provides power to all components as required by the particular exemplary display device 2040 design.

The network interface 2027 includes the antenna 2043 and the transceiver 2047 so that the exemplary display device 2040 can communicate with one or more devices over a network. In one embodiment the network interface 2027 may also have some processing capabilities to relieve requirements of the processor 2021. The antenna 2043 is any antenna known to those of skill in the art for transmitting and receiving signals. In one embodiment, the antenna transmits and receives RF signals according to the IEEE 802.11 standard, including IEEE 802.11 (a), (b), or (g). In another embodiment, the antenna transmits and receives RF signals according to the BLUETOOTH standard. In the case of a cellular telephone, the antenna is designed to receive CDMA, GSM, AMPS or other known signals that are used to communicate within a wireless cell phone network. The transceiver 2047 pre-processes the signals received from the antenna 2043 so that they may be received by and further manipulated by the processor 2021. The transceiver 2047 also processes signals received from the processor 2021 so that they may be transmitted from the exemplary display device 2040 via the antenna 2043.

In an alternative embodiment, the transceiver 2047 can be replaced by a receiver. In yet another alternative embodiment, network interface 2027 can be replaced by an image source, which can store or generate image data to be sent to the processor 2021. For example, the image source can be a digital video disc (DVD) or a hard-disc drive that contains image data, or a software module that generates image data.

Processor 2021 generally controls the overall operation of the exemplary display device 2040. The processor 2021 receives data, such as compressed image data from the network interface 2027 or an image source, and processes the data into raw image data or into a format that is readily processed into raw image data. The processor 2021 then sends the processed data to the driver controller 2029 or to frame buffer 2028 for storage. Raw data typically refers to the information that identifies the image characteristics at each location within an image. For example, such image characteristics can include color, saturation, and gray-scale level.

In one embodiment, the processor 2021 includes a microcontroller, CPU, or logic unit to control operation of the exemplary display device 2040. Conditioning hardware 2052 generally includes amplifiers and filters for transmitting signals to the speaker 2045, and for receiving signals from the microphone 2046. Conditioning hardware 2052 may be discrete components within the exemplary display device 2040, or may be incorporated within the processor 2021 or other components.

The driver controller 2029 takes the raw image data generated by the processor 2021 either directly from the processor 2021 or from the frame buffer 2028 and reformats the raw image data appropriately for high speed transmission to the array driver 2022. Specifically, the driver controller 2029 reformats the raw image data into a data flow having a raster-like format, such that it has a time order suitable for scanning across the display array 2030. Then the driver controller 2029 sends the formatted information to the array driver 2022. Although a driver controller 2029, such as a LCD controller, is often associated with the system processor 2021 as a stand-alone Integrated Circuit (IC), such controllers may be implemented in many ways. They may be embedded in the processor 2021 as hardware, embedded in the processor 2021 as software, or fully integrated in hardware with the array driver 2022.

Typically, the array driver 2022 receives the formatted information from the driver controller 2029 and reformats the video data into a parallel set of waveforms that are applied many times per second to the hundreds and sometimes thousands of leads coming from the display's x-y matrix of pixels.

In one embodiment, the driver controller 2029, array driver 2022, and display array 2030 are appropriate for any of the types of displays described herein. For example, in one embodiment, driver controller 2029 is a conventional display controller or a bi-stable display controller (e.g., an interferometric modulator controller). In another embodiment, array driver 2022 is a conventional driver or a bi-stable display driver (e.g., an interferometric modulator display). In one embodiment, a driver controller 2029 is integrated with the array driver 2022. Such an embodiment is common in highly integrated systems such as cellular phones, watches, and other small area displays. In yet another embodiment, display array 2030 is a typical display array or a bi-stable display array (e.g., a display including an array of interferometric modulators).

The input device 2048 allows a user to control the operation of the exemplary display device 2040. In one embodiment, input device 2048 includes a keypad, such as a QWERTY keyboard or a telephone keypad, a button, a switch, a touch-sensitive screen, a pressure- or heat-sensitive membrane. In one embodiment, the microphone 2046 is an input device for the exemplary display device 2040. When the microphone 2046 is used to input data to the device, voice commands may be provided by a user for controlling operations of the exemplary display device 2040.

Power supply 2050 can include a variety of energy storage devices as are well known in the art. For example, in one embodiment, power supply 2050 is a rechargeable battery, such as a nickel-cadmium battery or a lithium ion battery. In another embodiment, power supply 2050 is a renewable energy source, a capacitor, or a solar cell, including a plastic solar cell, and solar-cell paint. In another embodiment, power supply 2050 is configured to receive power from a wall outlet.

In some implementations control programmability resides, as described above, in a driver controller which can be located in several places in the electronic display system. In some cases control programmability resides in the array driver 2022. Those of skill in the art will recognize that the above-described optimization may be implemented in any number of hardware and/or software components and in various configurations.

Although the foregoing invention has been described in terms of certain embodiments, other embodiments will be apparent to those of ordinary skill in the art. Additionally, other combinations, omissions, substitutions and modification will be apparent to the skilled artisan, in view of the disclosure herein.

### Alternative Embodiments

Alternative embodiments are set out in the following clauses:
Clause 1. A reflective display apparatus, comprising: means for providing support; means for interferometrically modulating light; and means for covering said supporting means and said modulating means, said covering means positioned in optical communication with said supporting means with a gap therebetween, said covering mean including means for redirecting light, said light redirecting means configured to redirect at least a portion of light incident to said covering means onto said supporting means.
Clause 2. The apparatus of Clause 1, wherein said supporting means comprises a substrate.
Clause 3. The apparatus of Clause 1 or 2, wherein said modulating means comprises a plurality of interferometric modulators.
Clause 4. The apparatus of Clause 1, 2, or 3, wherein said covering means comprises a cover.
Clause 5. The apparatus of Clause 1, 2, 3, or 4, wherein said light redirecting means comprises light redirectors.
Clause 6. The apparatus of Clause 5, wherein said supporting means has a first surface and said modulating means are disposed on a second surface of the substrate opposite the first surface.
Clause 7. The apparatus of Clause 6, wherein said covering means has a third surface and said gap is between said first and third surfaces, the covering means being positioned in optical communication with the first surface.
Clause 8. The apparatus of Clause 5 or 7, wherein said light redirectors comprise at least partially reflective surfaces.
Clause 9. The apparatus of Clause 5 or 7, wherein said light redirectors include scattering centers.
Clause 10. The apparatus of Clause 5 or 7, wherein said light redirectors include fluorescent or phosphorescent material that absorbs said incident light and emits said redirected light at a different wavelength than said incident light.
Clause 11. The apparatus of Clause 10, wherein said incident light has a wavelength that is not visible to a human eye.
Clause 12. The apparatus of Clause 5 or 7, wherein said light redirectors are disposed on a surface of said covering means.
Clause 13. The apparatus of Clause 5 or 7, wherein said light redirectors comprise grooves in a surface of said cover.
Clause 14. The apparatus of Clause 5 or 7, wherein said light redirectors are disposed within a laminate which is disposed on a surface of said cover.
Clause 15. The apparatus of Clause 7, further comprising a light source positioned between planes defined by said first surface and said third surface, wherein said light source provides said light incident on the third surface.
Clause 16. A method of manufacturing a reflective display, comprising: positioning a plurality of interferometric modulators on a first surface of a substrate; forming a plurality of light redirectors in or on a cover, the cover having a second surface; and positioning the cover in optical communication with the plurality of interferometric modulators such that a gap exists between the second surface and a third surface on the substrate opposite the first surface, the light redirectors configured to redirect at least a portion of light incident on the second surface onto the third surface.
Clause 17. The method of Clause 16, wherein said light redirectors are at least partially reflective surfaces.
Clause 18. The method of Clause 16, wherein said light redirectors include scattering centers.
Clause 19. The method of Clause 16, wherein said light redirectors include fluorescent or phosphorescent material that absorbs said incident light and emits said redirected light at a different wavelength than said incident light.
Clause 20. The method of Clause 16, wherein said light redirectors comprise grooves in a surface of said cover.
Clause 21. The method of Clause 16, wherein said light redirectors are disposed within a laminate which is disposed on a surface of said cover.
Clause 22. A reflective display apparatus, comprising: means for providing reflective image content; means for supporting the providing means; and a plurality of means for redirecting light originating along a path that is oblique to said supporting means into the providing means.
Clause 23. The apparatus of Clause 22, wherein the providing means comprises is a plurality of reflective display elements.
Clause 24. The apparatus of Clause 23, wherein the reflective display elements comprise interferometric modulators.
Clause 25. The apparatus of Clause 22 or 23, wherein the supporting means comprises a substrate.
Clause 26. The apparatus of Clause 22, 23, or 25, wherein the redirecting means are light redirectors.
Clause 27. The apparatus of Clause 25, wherein the light redirectors are in or on a cover positioned in optical communication with the providing means with a gap existing between the providing means and the cover.
Clause 28. The apparatus of Clause 25, wherein said light redirectors comprise at least partially reflective surfaces.
Clause 29. The apparatus of Clause 25, wherein said light redirectors include scattering centers.
Clause 30. The apparatus of Clause 25, wherein said light redirectors include fluorescent or phosphorescent material that absorbs said incident light and emits said redirected light at a different wavelength than said incident light.
Clause 31. The apparatus of Clause 30, wherein said incident light has a wavelength that is not visible to a human eye.
Clause 32. The apparatus of Clause 27, wherein said light redirectors are disposed on a surface of said cover.
Clause 33. The apparatus of Clause 27, wherein said light redirectors comprise grooves in a surface of said cover.
Clause 34. The apparatus of Clause 27, wherein said light redirectors are disposed within a laminate which is disposed on a surface of said cover.
Clause 35. The apparatus of Clause 27, further comprising a light source configured to transmit light onto a surface of the display cover along a path that is oblique to the display cover, wherein said light redirectors are configured to redirect at least a portion of the incident light onto the providing means.
Clause 36. The apparatus of Clause 26, wherein the light redirectors are incorporated in a first material disposed over the supporting means.
Clause 37. The apparatus of Clause 36, wherein the first material is a film on the supporting means.
Clause 38. The apparatus of Clause 36, further comprising a second material disposed on the first material, wherein the second material has an index of refraction different than said first material.
Clause 39. The apparatus of Clause 36, wherein said light redirectors are defined by a non-uniform surface on the first material from which light may be reflected.
Clause 40. The apparatus of Clause 36, wherein the supporting means comprises a substrate and the providing means is disposed on a first surface of the substrate and the first material is disposed on a second surface of the substrate opposite the first surface.
Clause 41. A method of illuminating a reflective display, comprising: transmitting light onto a reflective display panel along a path that is oblique to the display panel; and redirecting at least a portion of said transmitted light so that redirected light is directed along a path that is less oblique to said display panel than said transmitted light.
Clause 42. The method of Clause 41, wherein said transmitting includes providing a light source that transmits light along a path oblique to the display panel.
Clause 43. The method of Clause 41, wherein transmitting light onto the reflective display panel comprises transmitting light onto a first surface of a display cover along a path that is oblique to the cover, the first surface of the display cover facing a second surface of a reflective display, there being a gap between the first surface and the second surface.
Clause 44. The method of Clause 41, wherein said redirecting includes reflecting said transmitted light.
Clause 45. The method of Clause 41, wherein said redirecting includes scattering said transmitted light.
Clause 46. The method of Clause 41, wherein said redirecting includes: absorbing said transmitted light in a fluorescent or phosphorescent material; and emitting at least a portion of said absorbed light from said fluorescent or phosphorescent material.
Clause 47. The method of Clause 46, wherein said transmitting includes transmitting light that has a wavelength that is not visible by a human eye.
Clause 48. A method of manufacturing a reflective display, comprising: positioning a plurality of reflective display elements on a substrate; and positioning a plurality of light redirectors in optical communication with said reflective display elements, the light redirectors configured to redirect at least a portion of light propagating along a path that is oblique to the substrate and that is incident on the light redirectors into the reflective display elements.
Clause 49. The method of Clause 48, wherein the reflective display elements are interferometric modulators.
Clause 50. The method of Clause 48, wherein positioning the plurality of light redirectors comprises: forming the plurality of light redirectors in a cover; and positioning the cover in optical communication with the plurality of reflective display elements such that a gap exists between the cover and the substrate.
Clause 51. The method of Clause 50, further comprising positioning a light source to transmit light onto the first surface of the display cover along a path that is oblique to the display cover.
Clause 52. The method of Clause 48, wherein positioning the plurality of light redirectors comprises: forming a first material comprising the plurality of light redirectors; and positioning the first material over a surface of the substrate opposite the plurality of light redirectors.
Clause 53. The method of Clause 52, further comprising positioning a second material on the first material, wherein the second material has an index of refraction different than said first material.
Clause 54. The method of Clause 52, wherein the first material is disposed on the second surface of the substrate.
Clause 55. A reflective display apparatus, comprising: means for reflectively displaying; means for supporting, said displaying means disposed on a first side of said supporting means; means for redirecting light disposed on a second opposite side of said supporting means, said light redirecting means having a first index of refraction.
Clause 56. The apparatus of Clause 55, wherein said reflectively displaying means comprises a plurality of reflective display elements.
Clause 57. The apparatus of Clause 55 or 56, wherein said supporting means comprises a substrate.
Clause 58. The apparatus of Clause 55, 56, or 57, wherein said light redirecting means comprises a plurality of light redirectors comprising a first material of said first refractive index.
Clause 59. The apparatus of Clause 55, further comprising means for providing a second index of refraction on said light redirecting means, said second index of refraction different than said first index of refraction.
Clause 60. The apparatus of Clause 59, wherein said second index of refraction providing means comprises a second material having said second index of refraction.
Clause 61. The apparatus of Clause 58, wherein said plurality of reflective display elements are disposed on a first surface of said substrate and said first material is disposed over a second surface of the substrate opposite said first surface.
Clause 62. The apparatus of Clause 58, wherein said light redirectors comprise grooves.
Clause 63. The apparatus of Clause 58, further comprising a light source adapted to emit light into the substrate.
Clause 64. The apparatus of Clause 61 or 63, wherein the first material is disposed on the second surface.
Clause 65. The apparatus of Clause 63, wherein said light redirectors are defined by a non-uniform surface on the first material from which light emitted by said light source is reflected into said reflective display elements.
Clause 66. The apparatus of Clause 58, wherein said reflective display elements include interferometric modulators.
Clause 67. A method of manufacturing a reflective display, comprising: positioning a plurality of interferometric modulators on a first surface of a substrate; and positioning a first material over a second surface of the substrate opposite said first surface, said first material comprising a plurality of light redirectors.
Clause 68. The method of Clause 67, further comprising positioning a second material on the first material, wherein the second material has an index of refraction different than said first material.
Clause 69. The method of Clause 67 or 68, further comprising positioning a light source so as to emit light into the substrate.
Clause 70. The method of Clause 67, 68, or 69, wherein the first material is positioned on the second surface of the substrate.
Clause 71. The method of Clause 67, 68, or 69, wherein the said plurality of light redirectors comprise groove.
Clause 72. A reflective display system, comprising: means for providing reflective image content; and means for absorbing light having a first wavelength and emitting light having a second wavelength different from said first wavelength onto said providing means.
Clause 73. The system of Clause 72, wherein the providing means comprises a plurality of reflective display elements.
Clause 74. The system of Clause 73, wherein the reflective display elements are interferometric modulators.
Clause 75. The system of Clauses 72 or 74, wherein the absorbing means comprises fluorescent or phosphorescent material.
Clause 76. The system of Clause 72, wherein said first wavelength is not visible to a human eye.
Clause 77. The system of Clause 75, wherein said fluorescent or phosphorescent material includes two or more fluorophors or phosphors of different types.
Clause 78. The system of Clause 75, further comprising a light absorbing material disposed on a portion of the surface of said fluorescent or phosphorescent material.
Clause 79. The system of Clause 78, wherein said light absorbing material absorbs light of said first wavelength.
Clause 80. The system of Clause 78, wherein said light absorbing material absorbs light of said second wavelength.
Clause 81. The system of Clause 72, further comprising a light source that emits light having said first wavelength.
Clause 82. The system of Clause 81, wherein said light source includes an LED.
Clause 83. The system of Clause 81, wherein said light source includes a compact fluorescent light source.
Clause 84. A method of illuminating a reflective display, comprising: transmitting light onto fluorescent or phosphorescent material that absorbs at least a portion of said light; and emitting from said fluorescent or phosphorescent material light having a different wavelength than said transmitted light onto reflective display elements.
Clause 85. The method of Clause 84, wherein said transmitted light is of a wavelength that is not visible to a human eye.
Clause 86. The method of Clause 84, wherein said transmitting includes providing a light source that faces a non-reflective surface of the reflective display elements.
Clause 87. A method of manufacturing a reflective display system, comprising positioning fluorescent or phosphorescent material in optical communication with a plurality of reflective display elements, wherein said material absorbs light having a first wavelength and emits light having a second wavelength different from said first wavelength into said reflective display elements.
Clause 88. An interferometric modulator display apparatus, comprising: means for providing reflective image content, said image content providing means comprising first and second means for reflecting; means for supporting said first reflecting means and separating said first reflecting means from the second reflecting means by a gap, said supporting means conducting light; and means for redirecting light conducted by said supporting means.
Clause 89. The apparatus of Clause 88, further comprising means for providing light to said supporting means.
Clause 90. The apparatus of Clause 88 or 89, wherein the image content providing means comprises a plurality of interferometric modulators.
Clause 91. The apparatus of Clauses 88, 89, or 90, wherein the supporting means comprises a plurality of at least partially optically transmissive posts.
Clause 92. The apparatus of any one of Clauses 88 to 91, wherein the first and second reflecting means comprise reflecting surfaces.
Clause 93. The apparatus of any one of Clauses 88 to 92, wherein the light redirecting means comprises a plurality of light redirectors aligned with said supporting means.
Clause 94. The apparatus of any one of Clauses 89 to 93 wherein the light providing means comprises a light source.
Clause 95. The apparatus of Clause 88, further comprising a substrate upon which said image content providing means are disposed, wherein said light redirecting means are disposed within the substrate.
Clause 96. The apparatus of Clause 88, further comprising a substrate upon which said image content providing means are disposed, wherein said third means are disposed on the substrate.
Clause 97. The apparatus of Clause 93, wherein said light redirectors include at least partially reflective surfaces.
Clause 98. The apparatus of Clause 93, wherein said light redirectors include scattering centers.
Clause 99. The apparatus of Clause 93, wherein said light redirectors include fluorescent or phosphorescent material that absorbs light and emits light at a different wavelength than said absorbed light.
Clause 100. The apparatus of Clause 99, wherein said absorbed light has a wavelength that is not visible to a human eye.
Clause 101. The apparatus or system of Clause 1, 22, 55, 72 or 88, further comprising: a processor that is in electrical communication with said reflectively displaying means, said processor being configured to process image data; a memory device in electrical communication with said processor.
Clause 102. The apparatus or system of Clause 101, further comprising a driver circuit configured to send at least one signal to said reflectively displaying means.
Clause 103. The apparatus or system of Clause 102, further comprising a controller configured to send at least a portion of said image data to said driver circuit.
Clause 104. The apparatus or system of Clause 101, further comprising an image source module configured to send said image data to said processor.
Clause 105. The apparatus or system of Clause 104, wherein said image source module comprises at least one of a receiver, transceiver, and transmitter.
Clause 106. The apparatus or system of Clause 101, further comprising an input device configured to receive input data and to communicate said input data to said processor.
Clause 107. A method of illuminating a reflective display, comprising: transmitting light through a plurality of at least partially optically transmissive posts into a substrate, wherein the posts support a reflective surface in a plurality of interferometric modulators disposed on the substrate; and redirecting at least a portion of said transmitted light into said interferometric modulators.
Clause 108. The method of Clause 107, wherein redirecting comprises redirecting from the substrate.
Clause 109. The method of Clause 107 or 108, wherein said transmitting includes providing a light source behind said interferometric modulators.
Clause 110. A method of manufacturing an interferometric modulator display, comprising: forming a plurality of at least partially optically transmissive posts to support a reflective surface in a plurality of interferometric modulators, the interferometric modulators having a front from which incident light is reflected; and positioning a plurality of light redirectors to be aligned with said posts.
Clause 111. The method of Clause 110, further comprising positioning a light source on a side opposite the front of the interferometric modulators.
Clause 112. A display produced by the process of any one of Clauses 16 to 21, 48 to 54, 67 to 71, 87, 110 or 111.

## Claims

1. A reflective display system, comprising:
means for providing reflective image content; and
means for absorbing light having a first wavelength and emitting light having a second wavelength different from said first wavelength onto said providing means, wherein light of the first wavelength excites the absorbing means and thereby causes emission of light of the second wavelength.

2. The system of claim 1, wherein the providing means comprises a plurality of reflective display elements and the absorbing means comprises fluorescent or phosphorescent material.

3. The system of claim 2, wherein the reflective display elements are interferometric modulators.

4. The system of claim 1, wherein said first wavelength is not visible to a human eye.

5. The system of claim 2, wherein said fluorescent or phosphorescent material includes two or more fluorophors or phosphors of different types.

6. The system of claim 2, further comprising a light absorbing material disposed on a portion of the surface of said fluorescent or phosphorescent material.

7. The system of claim 6, wherein said light absorbing material absorbs light of said first wavelength.

8. The system of claim 6, wherein said light absorbing material absorbs light of said second wavelength.

9. The system of claim 1, further comprising a light source that emits light having said first wavelength.

10. The system of claim 9, wherein said light source includes an LED.

11. The system of claim 9, wherein said light source includes a compact fluorescent light source.

12. A method of illuminating a reflective display, comprising:
transmitting light onto fluorescent or phosphorescent material that absorbs at least a portion of said light; and
emitting from said fluorescent or phosphorescent material light having a different wavelength than said transmitted light onto reflective display elements.

13. The method of claim 12, wherein said transmitted light is of a wavelength that is not visible to a human eye.

14. The method of claim 12, wherein said transmitting includes providing a light source that faces a non-reflective surface of the reflective display elements.

15. A method of manufacturing a reflective display system, comprising positioning fluorescent or phosphorescent material in optical communication with a plurality of reflective display elements, wherein said material absorbs light having a first wavelength and emits light having a second wavelength different from said first wavelength into said reflective display elements.
